# EUROPEAN PATENT APPLICATION

(11) **EP 4 561 167 A1**
(43) Date of publication of application: **28.05.2025**
(21) Application number: 22951513.5
(22) Date of filing: 20.07.2022
(51) Int. Cl.: H04W 36/00

(54) **HANDOVER METHOD AND APPARATUS, DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Dehns Germany Partnerschaft mbB
(86) International application number: PCT/CN2022/106879
(87) International publication number: WO 2024/016236

(57) **Abstract**

The present application relates to the field of mobile communications, and discloses a handover method and apparatus, a device, and a storage medium. The method comprises: a terminal receiving handover signaling sent by a first network device, wherein the handover signaling is determined by the first network device when it is determined that a beam measurement result satisfies a handover condition, and the beam measurement result is determined by the terminal by measurement of at least one candidate cell; and in response to the handover signaling, handing over to a target cell indicated by the handover signaling. The present application provides a solution that a network device controls, according to a beam measurement result, a terminal to perform cell handover; it is ensured that the network device determines handover signaling when it is determined that the beam measurement result satisfies a handover condition, and the terminal performs handover according to the handover signaling, thereby breaking the limitation of the network device performing handover only according to a cell measurement result.

## Description

### TECHNICAL FIELD

The present disclosure relates to the field of mobile communications, and in particular to a handover method, an apparatus, a device and a storage medium.

### BACKGROUND

In a mobile communication system, the network device covers at least one cell. When a terminal is within the cell covered by the network device, it can access the cell. If the terminal moves to another cell, it needs to perform a cell handover. Specifically, the terminal measures the cell and reports the obtained cell measurement result to the network device. The network device will return a handover signaling to the terminal according to the cell measurement result to instruct the terminal to handover.

However, since the network device controls the terminal to perform the cell handover only based on the cell measurement result reported by the terminal, it has limitations.

### SUMMARY

The embodiments of the present disclosure provide a handover method, an apparatus, a device and a storage medium, which break the limitations that the network device performs the cell handover only based on the cell measurement result. The technical solution is as follows:

According to an aspect of the present disclosure, there is provided a handover method, performed by a terminal, including:
receiving a handover signaling sent by a first network device, where the handover signaling is determined by the first network device when determining that a beam measurement result meets a handover condition, and the beam measurement result is determined by the terminal measuring at least one candidate cell; and
in response to the handover signaling, handing over to a target cell indicated by the handover signaling.

According to an aspect of the present disclosure, there is provided a handover method, performed by a network device, including:
determining a handover signaling when determining that a beam measurement result meets a handover condition; and
sending the handover signaling to a terminal, where the beam measurement result is determined by the terminal measuring at least one candidate cell, and the handover signaling instructs the terminal to hand over to a target cell indicated by the handover signaling.

According to an aspect of the present disclosure, there is provided a handover method, performed by a network device, including:
in response to a random access mode of a terminal, confirming that the terminal accesses a target cell of the second network device.

According to an aspect of the present disclosure, there is provided a handover device, including:
a receiving module, configured to receive a handover signaling sent by a first network device, where the handover signaling is determined by the first network device when determining that a beam measurement result meets a handover condition, and the beam measurement result is determined by a terminal measuring at least one candidate cell; and
a handover module, configured to hand over to a target cell indicated by the handover signaling in response to the handover signaling.

According to an aspect of the present disclosure, there is provided a handover device, including:
a determining module, configured to determine a handover signaling when determining that a beam measurement result meets a handover condition; and
a sending module, configured to send the handover signaling to a terminal, where the beam measurement result is determined by the terminal measuring at least one candidate cell, and the handover signaling instructs the terminal to hand over to a target cell indicated by the handover signaling.

According to an aspect of the present disclosure, there is provided a handover device, including:
a confirmation module, configured to confirm that a terminal accesses a target cell of a second network device in response to a random access mode of the terminal.

According to an aspect of the present disclosure, there is provided a terminal, including: a processor; and a transceiver connected to the processor; where the processor is configured to load and execute executable instructions to implement the handover method according to the above aspects.

According to an aspect of the present disclosure, there is provided a network device, including: a processor; and a transceiver connected to the processor; where the processor is configured to load and execute executable instructions to implement the handover method according to the above aspects.

According to an aspect of the present disclosure, there is provided a computer-readable storage medium, where an executable program code is stored in the computer-readable storage medium, the executable program code is loaded and executed by a processor to implement the handover method according to the above aspects.

According to an aspect of the present disclosure, there is provided a chip. The chip includes a programmable logic circuit and/or a program instruction. When the chip is running on a terminal or a network device, the handover method according to the above aspects is implemented.

According to an aspect of the present disclosure, there is provided a computer program product. When the computer program product is executed by a terminal or a network device, the handover method according to the above aspects is implemented.

In the solution provided by the embodiment of the present disclosure, a solution is provided in which a network device controls a terminal to perform cell handover according to a beam measurement result, so as to ensure that the network device determines a handover signaling when determining that the beam measurement result meets a handover condition, and the terminal performs handover according to the handover signaling, breaking the limitation that the network device performs handover only based on the cell measurement result. In addition, in the embodiment of the present disclosure, the handover signaling sent by the first network device indicates a target cell, and does not need to indicate parameter information of the target cell, thereby saving signaling overhead and improving the timeliness of handover to the target cell.

### BRIEF DESCRIPTION OF THE DRAWINGS

In order to more clearly illustrate the technical solutions in the embodiments of the present disclosure, the following will briefly introduce the drawings required for the description of the embodiments. Obviously, the drawings described below are only some embodiments of the present disclosure. For those skilled in the art, other drawings can be obtained based on these drawings without inventive work.
FIG. 1 shows a block diagram of a communication system provided by an example embodiment of the present disclosure;
FIG. 2 shows a flow chart of a handover method provided by an example embodiment of the present disclosure;
FIG. 3 shows a flow chart of a configuration method for a candidate cell provided by an example embodiment of the present disclosure;
FIG. 4 shows a flow chart of a measurement method for a candidate cell provided by an example embodiment of the present disclosure;
FIG. 5 shows a flow chart of a handover method provided by an example embodiment of the present disclosure;
FIG. 6 shows a flow chart of a handover method provided by an example embodiment of the present disclosure;
FIG. 7 shows a flow chart of a handover method provided by an example embodiment of the present disclosure;
FIG. 8 shows a flow chart of a handover method provided by an example embodiment of the present disclosure;
FIG. 9 shows a block diagram of a handover device provided by an example embodiment of the present disclosure;
FIG. 10 shows a block diagram of another handover device provided by an example embodiment of the present disclosure;
FIG. 11 shows a block diagram of a handover device provided by an example embodiment of the present disclosure;
FIG. 12 shows a block diagram of a handover device provided by an example embodiment of the present disclosure;
FIG. 13 shows a schematic diagram of a structure of a communication device provided by an example embodiment of the present disclosure.

### DETAILED DESCRIPTION

In order to make the purpose, technical solution and advantages of the present disclosure clearer, the embodiments of the present disclosure will be further described in detail in conjunction with the accompanying drawings.

Here, the example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all implementations consistent with the present disclosure. Instead, they are only examples of devices and methods consistent with some aspects of the present disclosure as detailed in the attached claims.

The terms used in the present disclosure are only for the purpose of describing specific embodiments and are not intended to limit the present disclosure. The singular forms "a", "an", "said" and "the" used in the present disclosure and the attached claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used in the present disclosure to describe various information, and such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at..." or "when..." or "in response to determining".

It should be noted that the information (including but not limited to user device information, user personal information, etc.), data (including but not limited to data for analysis, stored data, displayed data, etc.) and signals involved in the present disclosure are all authorized by the user or fully authorized by all parties, and the collection, use and processing of relevant data need to comply with relevant laws, regulations and standards of relevant countries and regions.

In the following, the application scenario of the present disclosure is described:

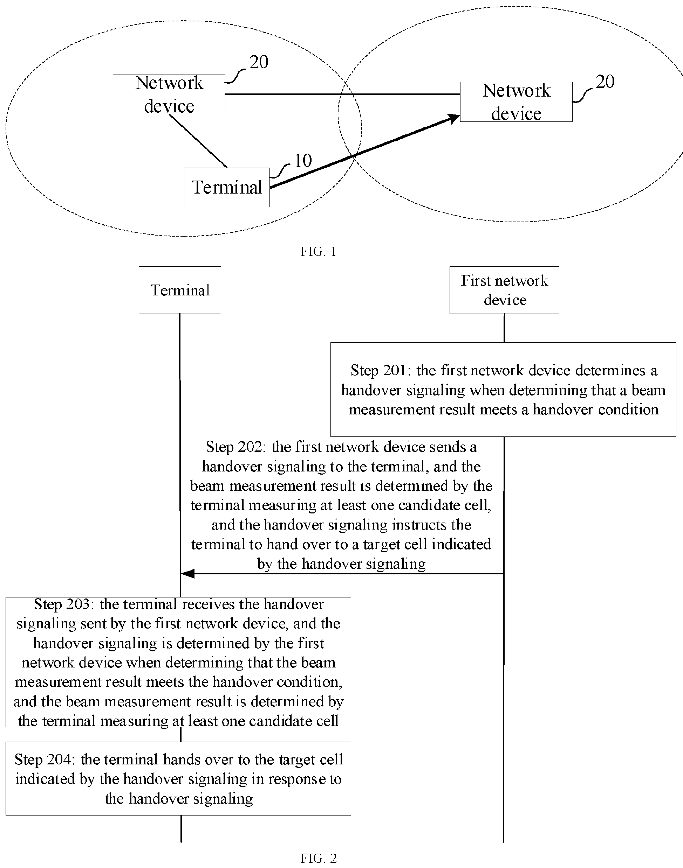

FIG. 1 shows a block diagram of a communication system provided by an example embodiment of the present disclosure, and the communication system may include a terminal 10 and a network device 20.

The number of terminals 10 is usually multiple, and one or more terminals 10 may be distributed in a cell managed by each network device 20. The terminal 10 may include various handheld devices with wireless communication functions, vehicle-mounted devices, wearable devices, computing devices or other processing devices connected to a wireless modem, as well as various forms of user equipment (UE), mobile stations (MS), etc. For the convenience of description, in the embodiments of the present disclosure, the above-mentioned devices are collectively referred to as terminals.

The network device 20 is a device deployed in an access network to provide a wireless communication function for the terminal 10. For the convenience of description, in the embodiments of the present disclosure, the above-mentioned devices that provide wireless communication functions for the terminal 10 are collectively referred to as network devices. A connection can be established between the network device 20 and the terminal 10 through an air interface, so that communication can be carried out through the connection, including signaling and data interaction. There can be multiple network devices 20, and two adjacent network devices 20 can also communicate through wired or wireless means. The terminal 10 can hand over between different network devices 20, that is, establish connections with different network devices 20.

The network device 20 may include various forms of macro base stations, micro base stations, relay stations, access points, etc. In systems using different wireless access technologies, the names of devices with network device functions may be different. For example, in a 5G NR (New Radio, new air interface) system, it is called gNodeB or gNB. With the evolution of communication technology, the name "network device" may change.

FIG. 2 shows a flowchart of a handover method provided by an example embodiment of the present disclosure, which can be applied to the terminal and the first network device as shown in FIG. 1, and the method includes at least part of the following contents:
Step 201: the first network device determines a handover signaling when determining that a beam measurement result meets a handover condition.

The beam measurement result refers to a result obtained by the terminal performing L1 (layer 1) measurement.

The handover condition refers to a judgment condition for the terminal to perform cell handover. If the network device determines that the beam measurement result of the candidate cell meets the handover condition, it can instruct the terminal to hand over to the candidate cell that meets the handover condition.

In some embodiments, the handover condition refers to that an average value or a maximum value of the beam measurement results of the candidate cell is greater than a preset threshold. That is, when the average value of the beam measurement results of the candidate cell is greater than the preset threshold, it is determined that the handover condition is met. Or, when the maximum value of the beam measurement results of the candidate cell is greater than the preset threshold, it is determined that the handover condition is met.

In other embodiments, the handover condition refers to that the top N best measurement results in the beam measurement results are the measurement results of the candidate cell, and N is a positive integer. That is, when the measurement results of the candidate cell are the top N best measurement results, it is determined that the handover condition is met.

In other embodiments, the handover condition refers to that the measurement result of the best beam of the candidate cell is greater than the sum of the measurement result of the best beam of the serving cell and the first offset value (offset1). That is, when the measurement result of the best beam of the candidate cell is greater than the sum of the measurement result of the best beam of the serving cell and the first offset value, it is determined that the handover condition is met.

In other embodiments, the handover condition refers to that the average value of the beam measurement results of the candidate cell is greater than the sum of the average value of the beam measurement results of the serving cell and the second offset value (offset2). That is, when the average value of the beam measurement result of the candidate cell is greater than the sum of the average value of the beam measurement result of the serving cell and the second offset value, it is determined that the handover condition is met.

It should be noted that in the embodiment of the present disclosure, the first network device determining whether the beam measurement result meets the handover condition is achieved according to the first network device's own rules, and the present disclosure does not limit the first network device to determine whether the beam measurement result meets the handover condition.

For example, after the first network device determines that the beam measurement result meets the handover condition, it will also determine whether the current load meets the handover condition, and determine the handover signaling when the current load meets the handover condition.

In an embodiment of the present disclosure, the beam measurement result includes a measurement result of at least one candidate cell. That is, the terminal measures at least one candidate cell, obtains a beam measurement result of at least one candidate cell, and reports the beam measurement result of at least one candidate cell to the network device. After the network device receives the beam measurement result sent by the terminal, it can determine the handover signaling according to the beam measurement result.

The candidate cell refers to a cell for which the terminal needs to perform beam measurement. In some embodiments, at least one candidate cell is configured by the network device.

Step 202: the first network device sends a handover signaling to the terminal, and the beam measurement result is determined by the terminal measuring at least one candidate cell, and the handover signaling instructs the terminal to hand over to a target cell indicated by the handover signaling.

In some embodiments, the first network device corresponds to a source cell and can also be referred to as a sourcecell.

In some embodiments, the first network device also sends a response information to the CU (Central Unit), and the response information instructs the terminal to perform cell handover and indicates the target cell. After the CU receives the response information sent by the first network device, it can determine that the terminal will hand over subsequently and it can determine the target cell to be handed over to.

The CU refers to a device that controls the first network device, and the CU can also control a second network device corresponding to the target cell.

In some embodiments, CU belongs to a unit in gNB. In some embodiments, the original gNB concept is split into a CU and multiple DUs (Distributed Units). CU is a central unit, and CU is configured to control multiple DUs. The embodiment of the present disclosure is not limited to the above-mentioned splitting form, and there can also be different splitting forms.

Step 203: the terminal receives the handover signaling sent by the first network device, and the handover signaling is determined by the first network device when determining that the beam measurement result meets the handover condition, and the beam measurement result is determined by the terminal measuring at least one candidate cell.

In the embodiment of the present disclosure, the first network device receives the beam measurement result reported by the terminal, and the network device can determine whether the handover condition is met according to the beam measurement result of at least one candidate cell, determine the handover signaling when determining that the beam measurement result meets the handover condition, and send the handover signaling to the terminal. After the terminal receives the handover signaling, it can be determined that the first network device instructs the terminal to hand over to the target cell.

Step 204: the terminal hands over to the target cell indicated by the handover signaling in response to the handover signaling.

In an embodiment of the present disclosure, the terminal receives a handover signaling sent by the first network device. Since the handover signaling instructs the terminal to hand over to a target cell indicated by the handover signaling, the terminal hands over to the target cell indicated by the handover signaling in response to the handover signaling.

It should be noted that the steps performed by the terminal in the embodiment of the present disclosure can form a new embodiment separately, and the steps performed by the network device can also form a new embodiment separately, which is not limited by the embodiment of the present disclosure.

In the solution provided by the embodiment of the present disclosure, a solution is provided in which a network device controls a terminal to perform cell handover according to a beam measurement result, so as to ensure that the network device determines a handover signaling when determining that the beam measurement result meets a handover condition, and the terminal performs handover according to the handover signaling, breaking the limitation that the network device performs handover only based on the cell measurement result.

Moreover, in the embodiment of the present disclosure, the handover signaling sent by the first network device indicates a target cell, and does not need to indicate parameter information of the target cell, thereby saving the signaling overhead and improving the timeliness of handover to the target cell.

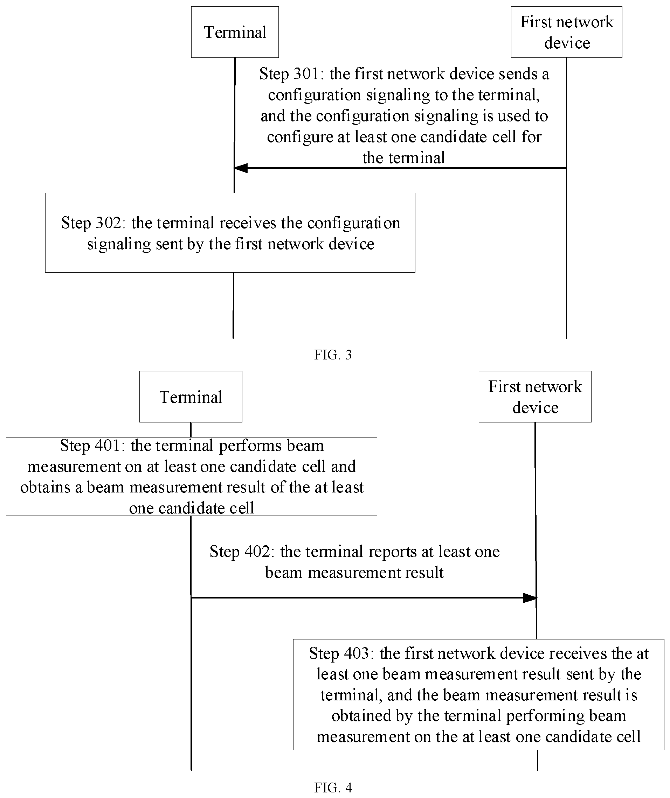

The embodiment of FIG. 2 is described by taking an example of a network device determining to instruct a terminal to hand over. The following is an explanation of how the network device configures at least one candidate cell for the terminal. FIG. 3 shows a flowchart of a configuration method for a candidate cell provided by an example embodiment of the present disclosure, which can be applied to the terminal and the network device shown in FIG. 1, for example. The method includes at least part of the following contents:

Step 301: the first network device sends a configuration signaling to the terminal, and the configuration signaling is used to configure at least one candidate cell for the terminal.

In the embodiment of the present disclosure, the first network device can determine at least one candidate cell, and then send a configuration signaling to the terminal to configure the terminal with at least one candidate cell determined by the first network device.

In some embodiments, the first network device determines at least one candidate cell based on a cell measurement result, and the cell measurement result and the beam measurement result are measurement results of different layers.

The cell measurement result refers to a result obtained by the terminal performing L3 (layer 3) measurement.

In the embodiment of the present disclosure, the first network device can obtain a cell measurement result of at least one neighboring cell, and the first network device can determine at least one candidate cell based on the cell measurement result of the neighboring cell. Then, the first network device sends a configuration signaling to the terminal to configure the terminal with at least one determined candidate cell.

Step 302: the terminal receives the configuration signaling sent by the first network device.

In the embodiment of the present disclosure, after receiving the configuration signaling sent by the first network device, the terminal can determine the at least one candidate cell configured by the first network device for the terminal, and the terminal can perform beam measurement on the at least one candidate cell to obtain the beam measurement result of the at least one candidate cell.

In some embodiments, the configuration signaling includes at least one of the following:
(1) A TCI (Transmission Configuration Indicator) state of the candidate cell.
   The TCI state is used for beam indication. The TCI state of the candidate cell actually refers to the beam of the candidate cell.
(2) A resource for random access.
   The random access refers to that the terminal can access the target cell by random access. The resource for random access refers to a resource configured to transmit information during the random access process.
(3) A resource for sending access confirmation information to the target cell.

The access confirmation information indicates that the terminal has accessed the target cell.

In some embodiments, the configuration signaling is RRC (Radio Resource Control) signaling, or the configuration signaling can also be other types of signaling, which is not limited in the embodiments of the present disclosure.

In some embodiments, the resource for sending the access confirmation information to the target cell is a PUSCH (Physical Uplink Shared Channel) resource. For example, the terminal sends a MAC CE (Media Access Control Control Element) to the target cell through the PUSCH resource to indicate successful access to the target cell.

In other embodiments, the resource for sending the access confirmation information to the target cell is an SR resource. For example, the terminal sends an SR (Scheduling Request) to the target cell through the SR resource to indicate successful access to the target cell.

In the solution provided in the embodiment of the present disclosure, the network device configures at least one candidate cell for the terminal, so that the terminal performs beam measurement on the at least one candidate cell and obtains the beam measurement result. Then the network device determines the handover signaling according to the beam measurement result to instruct the terminal to hand over, breaking the limitation that the network device performs handover only based on the cell measurement result. Moreover, in the embodiment of the present disclosure, the first network device configures the parameter information of the candidate cell for the terminal in advance through the configuration signaling, so the handover signaling sent by the first network device directly indicates the target cell, and does not need to indicate the parameter information of the target cell, thereby saving the signaling overhead and improving the timeliness of handover to the target cell.

The embodiment of FIG. 2 is described by taking an example of a network device determining a handover signaling according to the beam measurement result. The following is an explanation of how the terminal reports the beam measurement result of at least one candidate cell. FIG. 4 shows a flowchart of a measurement method for a candidate cell provided by an example embodiment of the present disclosure, which can be applied to the terminal and the network device shown in FIG. 1, for example. The method includes at least part of the following contents:

Step 401: the terminal performs beam measurement on at least one candidate cell and obtains a beam measurement result of the at least one candidate cell.

In the embodiment of the present disclosure, the terminal has determined the at least one candidate cell, and the terminal can perform beam measurement on the at least one candidate cell to obtain the beam measurement result of the at least one candidate cell.

For example, the beam measurement result is a measurement result based on L1, so the terminal performs L1 beam measurement on the at least one candidate cell to obtain the beam measurement result.

Step 402: the terminal reports at least one beam measurement result.

In an embodiment of the present disclosure, the terminal measures the at least one candidate cell to obtain the beam measurement result of each candidate cell, and the terminal can subsequently report the obtained at least one beam measurement result.

In some embodiments, the terminal sends the beam measurement result of the at least one candidate cell to the network device.

In other embodiments, the terminal selects the beam measurement results of some candidate cells from the beam measurement results of the at least one candidate cell, and sends the selected beam measurement results of some candidate cells to the network device.

Step 403: the first network device receives the at least one beam measurement result sent by the terminal, and the beam measurement result is obtained by the terminal performing beam measurement on the at least one candidate cell.

After the terminal reports the at least one beam measurement result, the first network device can receive the at least one beam measurement result reported by the terminal, and then can perform the subsequent step of determining the handover signaling.

It should be noted that the embodiment of the present disclosure is illustrated by performing steps 401-403 once as an example. In another embodiment, the above steps 401-403 can be performed multiple times. That is, the terminal can report the beam measurement result multiple times, and the first network device can also receive the beam measurement result multiple times, and then perform step 201 multiple times to dynamically instruct the terminal to perform cell handover.

In some embodiments, the terminal performs beam measurement every preset time period, and then reports the beam measurement result. The first network device will also receive the beam measurement result every preset time period, and then determine whether to send a handover signaling according to the received beam measurement results, that is, dynamic handover is achieved.

For example, the preset time period is set by the network device, or is agreed by the communication protocol, or is set in other ways, which is not limited in the embodiment of the present disclosure.

In the solution provided by the embodiment of the present disclosure, the terminal performs beam measurement on at least one candidate cell, and then reports the obtained beam measurement result, so that the first network device determines the handover signaling based on the received beam measurement result to instruct the terminal to hand over, breaking the limitation that the network device performs handover only based on the cell measurement result. Moreover, in the embodiment of the present disclosure, the handover signaling sent by the first network device only needs to indicate the target cell, and does not need to indicate the parameter information of the target cell, thereby saving the signaling overhead and improving the timeliness of handover to the target cell.

The embodiment shown in FIG. 2 is described by taking an example of a first network device sending a handover signaling to instruct a terminal to hand over. The handover signaling sent by the first network device is described below.

In some embodiments, the handover signaling is MAC CE, or the handover signaling is DCI (Downlink Control Information).

In the embodiment of the present disclosure, the handover signaling sent by the first network device to the terminal may be MAC CE, and the terminal may perform handover after receiving the MAC CE.

Alternatively, the handover signaling sent by the first network device to the terminal may be DCI, and the terminal may perform handover after receiving the DCI.

It should be noted that the handover signaling uses different ways to indicate the TCI state to indicate the target cell.

In some embodiments, in a case where the handover signaling is MAC CE, the MAC CE is configured to activate a TCI state of a cell.

That is, if the handover signaling determined by the first network device is MAC CE, the first network device sends the MAC CE to the terminal, and the MAC CE is configured to indicate a TCI state of a cell, and the cell corresponding to the TCI state is the target cell by default.

In other embodiments, in a case where the handover signaling is DCI, the DCI is configured to indicate a TCI state corresponding to one of the multiple activated cells.

That is, if the handover signaling determined by the first network device is DCI, and before sending the DCI, the first network device has activated TCI states corresponding to multiple cells for the terminal, then a TCI state corresponding to one of the multiple activated cells is indicated by the sent DCI, thereby indicating that the cell corresponding to the TCI state is the target cell.

In some embodiments, the TCI states corresponding to the multiple activated cells are activated by MAC CE. That is, the first network device needs to first send a MAC CE to the terminal, activate the TCI states of multiple cells through the MAC CE, and then indicate the TCI state of one of the multiple activated cells through DCI.

It should be noted that in the embodiment of the present disclosure, the first network device and the second network device are managed by different DUs, and the first network device can directly send the TCI state indicated by the above-mentioned handover signaling to perform cell handover. In other embodiments, the first network device and the second network device also have the situation of being applied to intra-DU, that is, the cells corresponding to the first network device and the second network device are managed by the same DU. In this case, the first network device and the second network device need to consider not only the TCI state indicated by the handover signaling, but also a type indicator.

In some embodiments, the handover signaling also includes a type indicator, which indicates whether to perform cell handover.

In the embodiment of the present disclosure, since the first network device has activated multiple TCI states, for each TCI state, a type indicator corresponding to each TCI state is also indicated, so that when the TCI state of one of the multiple cells is indicated by DCI, whether to hand over to the target cell is determined based on the target cell corresponding to the TCI state and the type indicator.

For example, the type indicator includes 1 bit. When the type indicator is 0, the terminal determines not to hand over to the target cell according to the target cell corresponding to the TCI state and the type indicator. When the type indicator is 1, the terminal determines to hand over to the target cell according to the target cell corresponding to the TCI state and the type indicator.

It should be noted that the embodiment of the present disclosure is explained by taking an example of indicating the target cell by indicating the TCI state. In another embodiment, the handover signaling also includes a handover indication field, which indicates the target cell.

In the embodiment of the present disclosure, the first network device directly sets the handover indication field in the handover signaling, and directly indicates the target cell through the handover indication field.

In some embodiments, the handover indication field indicates the identity of the target cell. For example, the identity of the target cell is the ID of the target cell.

In some embodiments, the handover indication field includes a preset number of bits, and the values of the preset number of bits are different, indicating different target cells.

The preset number is set by the network device, or is agreed upon by the communication protocol, or is set in other ways, and the embodiments of the present disclosure are not limited. For example, the preset number is 2, 3, 4 or other values.

For example, if the preset number is 2, the first network device indicates 4 different target cells through a 2-bit handover indication field. If the handover indication field is 00, it indicates target cell 1, or, if the handover indication field is 01, it indicates target cell 2, or, if the handover indication field is 10, it indicates target cell 3, or, if the handover indication field is 11, it indicates target cell 4.

In the solution provided by the embodiments of the present disclosure, the first network device can use multiple forms of handover signaling to instruct the terminal to hand over to the target cell, which expands the way the first network device sends the handover signaling and improves the diversity of the handover signaling.

The embodiment shown in FIG. 2 is explained by taking an example in which a terminal can hands over to a cell indicated by the handover signaling. The following will explain how the terminal hands over to the target cell.

In some embodiments, the terminal accesses a target cell indicated by the handover signaling through random access mode in response to the handover signaling.

The random access mode refers to that the terminal sends a random access preamble to the second network device corresponding to the target cell; the second network device receives the random access preamble, sends a random access response in response to the random access preamble; the terminal sends an RRC connection request after receiving the random access response; and the second network device completes the access after receiving the RRC connection request.

That is, in the embodiment of the present disclosure, a handover signaling is received, and in response to the handover signaling, the handover to the target cell can be performed through the above random access mode.

In some embodiments, the resource for random access is configured by the configuration signaling. For details, refer to the resource for random access included in the configuration signaling in the above embodiment.

It should be noted that the second network device can determine that the terminal accesses the target cell of the second network device in response to the random access mode of the terminal.

In the solution provided by the embodiment of the present disclosure, after the terminal receives the handover signaling, it can hand over to the target cell through a random access signaling in response to the handover signaling, breaking the limitation that the network device hands over only based on the cell measurement result. Moreover, in the embodiment of the present disclosure, the handover signaling sent by the first network device indicates the target cell, and does not need to indicate the parameter information of the target cell, thereby saving the signaling overhead and improving the timeliness of handover to the target cell.

It should be noted that the above embodiment is illustrated by taking an example of the terminal handing over to the target cell by the random access mode. In another embodiment, if the terminal has obtained TA (Timing Advance), the terminal can directly hand over to the target cell.

In the embodiment of the present disclosure, in the case where TA has been obtained, in response to the handover signaling, an access confirmation message is sent to the second network device corresponding to the target cell based on the configured resource, and handover to the target cell indicated by the handover signaling is performed.

In the embodiment of the present disclosure, the TA indicates the timing advance of the terminal, that is, the terminal can complete uplink synchronization according to the TA. Thus, the terminal can send access confirmation information to the second network device corresponding to the target cell based on the configured resource in response to the received handover signaling, and inform the second network device through the access confirmation information that the terminal has accessed the target cell, and then communicates through the target cell.

It should be noted that the second network device receives the access confirmation information sent by the terminal and determines that the terminal has accessed the target cell of the second network device.

In the solution provided by the embodiment of the present disclosure, after the receiving the handover signaling, if the terminal has obtained the TA, the terminal sends access confirmation information in response to the handover signaling, and then hands over to the target cell, breaking the limitation that the network device hands over only based on the cell measurement result. In addition, in the embodiment of the present disclosure, the handover signaling sent by the first network device indicates the target cell, and does not need to indicate the parameter information of the target cell, thereby saving the signaling overhead and improving the timeliness of handover to the target cell.

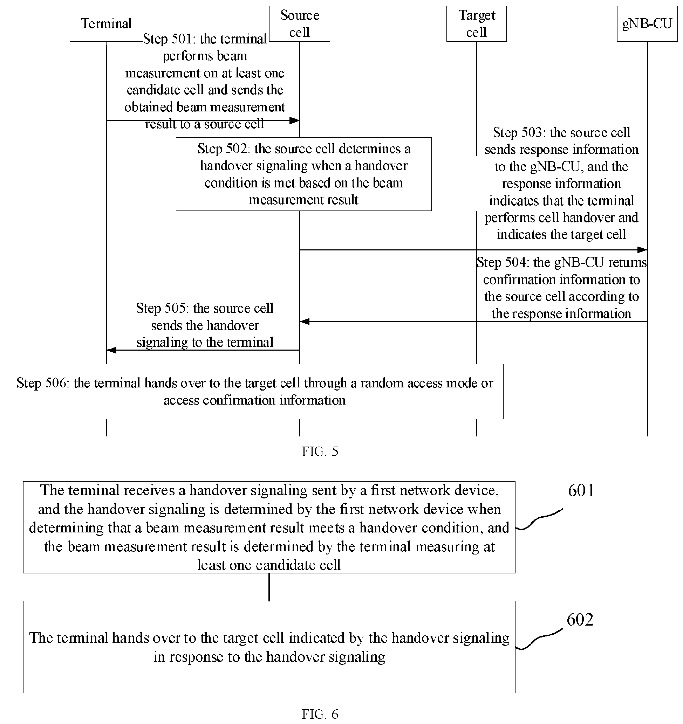

In the following, the above embodiment is illustrated by examples. Taking an example of the cell configured by the first network device being the source cell, the cell configured by the second network device being the target cell, and the CU being the gNB-CU, refer to FIG. 5, FIG. 5 shows a flowchart of a handover method provided by an example embodiment of the present disclosure, and the method includes at least part of the following contents:
Step 501: the terminal performs beam measurement on at least one candidate cell and sends the obtained beam measurement result to a source cell.
Step 502: the source cell determines a handover signaling when a handover condition is met based on the beam measurement result.
Step 503: the source cell sends response information to the gNB-CU, and the response information indicates that the terminal performs cell handover and indicates the target cell.
   After the CU receives the response information sent by the first network device, it can determine that the terminal will hand over subsequently and it can determine the target cell to be handed over to.
Step 504: the gNB-CU returns confirmation information to the source cell according to the response information.
Step 505: the source cell sends the handover signaling to the terminal.
Step 506: the terminal hands over to the target cell through a random access mode or access confirmation information.

It should be noted that, in the embodiment of the present disclosure, the steps performed by the terminal can form a new embodiment alone, and the steps performed by the network device can also form a new embodiment alone, which is not limited by the embodiment of the present disclosure.

It should be noted that the above embodiment can be divided into a new embodiment, or combined with other embodiments to form a new embodiment, and the present disclosure does not limit the combination between the embodiments.

FIG. 6 shows a flowchart of a handover method provided by an example embodiment of the present disclosure, which can be applied to the terminal shown in FIG. 1 for example. The method includes at least part of the following contents:
Step 601: the terminal receives a handover signaling sent by a first network device, and the handover signaling is determined by the first network device when determining that a beam measurement result meets a handover condition, and the beam measurement result is determined by the terminal measuring at least one candidate cell.

The beam measurement result refers to a result obtained by the terminal performing L1 (layer 1) measurement.

The handover condition refers to a judgment condition for the terminal to perform cell handover. If the network device determines that the beam measurement result of the candidate cell meets the handover condition, it can instruct the terminal to hand over to the candidate cell that meets the handover condition.

In some embodiments, the handover condition refers to that an average value or a maximum value of the beam measurement results of the candidate cell is greater than a preset threshold. That is, when the average value of the beam measurement results of the candidate cell is greater than the preset threshold, it is determined that the handover condition is met. Or, when the maximum value of the beam measurement results of the candidate cell is greater than the preset threshold, it is determined that the handover condition is met.

In other embodiments, the handover condition refers to that the top N best measurement results in the beam measurement result are the measurement results of the candidate cell, and N is a positive integer. That is, when the measurement results of the candidate cell are the top N best measurement results, it is determined that the handover condition is met.

In other embodiments, the handover condition refers to that the measurement result of the best beam of the candidate cell is greater than the sum of the measurement result of the best beam of the serving cell and the first offset value (offset1). That is, when the measurement result of the best beam of the candidate cell is greater than the sum of the measurement result of the best beam of the serving cell and the first offset value, it is determined that the handover condition is met.

In other embodiments, the handover condition refers to that the average value of the beam measurement results of the candidate cell is greater than the sum of the average value of the beam measurement results of the serving cell and the second offset value (offset2). That is, when the average value of the beam measurement results of the candidate cell is greater than the sum of the average value of the beam measurement results of the serving cell and the second offset value, it is determined that the handover condition is met.

It should be noted that in the embodiment of the present disclosure, the first network device determining whether the beam measurement result meets the handover condition is achieved according to the first network device's own rules, and the present disclosure does not limit the first network device to determine whether the beam measurement result meets the handover condition.

For example, after the first network device determines that the beam measurement result meets the handover condition, it will also determine whether the current load meets the handover condition, and determine the handover signaling when the current load meets the handover condition.

In an embodiment of the present disclosure, the first network device receives the beam measurement result reported by the terminal, and the network device can determine whether the handover condition is met according to the beam measurement result of at least one candidate cell, and determine the handover signaling when determining that the beam measurement result meets the handover condition, and send the handover signaling to the terminal. After the terminal receives the handover signaling, it can be determined that the first network device instructs the terminal to hand over to the target cell.

Step 602: the terminal hands over to the target cell indicated by the handover signaling in response to the handover signaling.

In an embodiment of the present disclosure, the terminal receives a handover signaling sent by the first network device. Since the handover signaling instructs the terminal to hand over to a target cell indicated by the handover signaling, the terminal hands over to the target cell indicated by the handover signaling in response to the handover signaling.

In the solution provided by the embodiment of the present disclosure, a solution is provided in which a network device controls a terminal to perform cell handover according to the beam measurement result, so as to ensure that the network device determines a handover signaling when determining that the beam measurement result meets a handover condition, and the terminal performs handover according to the handover signaling, breaking the limitation that the network device performs handover only based on the cell measurement result.

Moreover, in the embodiment of the present disclosure, the handover signaling sent by the first network device indicate a target cell, and does not need to indicate parameter information of the target cell, thereby saving the signaling overhead and improving the timeliness of handover to the target cell.

In some embodiments, the terminal receives the configuration signaling sent by the first network device.

In the embodiment of the present disclosure, after receiving the configuration signaling sent by the first network device, the terminal can determine the at least one candidate cell configured by the first network device for the terminal, and the terminal can perform beam measurement on the at least one candidate cell to obtain the beam measurement result of the at least one candidate cell.

In some embodiments, the configuration signaling includes at least one of the following:
(1) A TCI state of the candidate cell.
   The TCI state is used for beam indication. The TCI state of the candidate cell actually refers to the beam of the candidate cell.
(2) A Resource for random access.
   The random access refers to that the terminal can access the target cell by random access. The resource for random access refers to a resource configured to transmit information during the random access process.
(3) A resource for sending access confirmation information to the target cell.

The access confirmation information indicates that the terminal has accessed the target cell.

In some embodiments, the configuration signaling is RRC signaling, or the configuration signaling can also be other types of signaling, which is not limited in the embodiments of the present disclosure.

In some embodiments, the resource for sending the access confirmation information to the target cell is a PUSCH resource. For example, the terminal sends a MAC CE to the target cell through the PUSCH resource to indicate successful access to the target cell.

In other embodiments, the resource for sending the access confirmation information to the target cell is an SR resource. For example, the terminal sends an SR to the target cell through the SR resource to indicate successful access to the target cell.

In some embodiments, the terminal performs beam measurement on at least one candidate cell to obtain a beam measurement result of the at least one candidate cell. The terminal reports at least one beam measurement result.

In the embodiments of the present disclosure, the terminal has determined the at least one candidate cell, and the terminal can perform beam measurement on the at least one candidate cell to obtain the beam measurement result of the at least one candidate cell.

For example, the beam measurement result is a measurement result based on L1, so the terminal performs L1 beam measurement on the at least one candidate cell to obtain the beam measurement result.

In an embodiment of the present disclosure, the terminal measures the at least one candidate cell to obtain the beam measurement result of each candidate cell, and the terminal can subsequently report the obtained at least one beam measurement result.

In some embodiments, the terminal sends the beam measurement result of the at least one candidate cell to the network device.

In other embodiments, the terminal selects the beam measurement results of some candidate cells from the beam measurement results of the at least one candidate cell, and sends the selected beam measurement results of some candidate cells to the network device.

In some embodiments, the terminal performs beam measurement every preset time period, and then reports the beam measurement result. The first network device will also receive the beam measurement result every preset time period, and then determine whether to send a handover signaling according to the received beam measurement results, that is, dynamic handover is realized.

For example, the preset time period is set by the network device, or is agreed by the communication protocol, or is set in other ways, which is not limited in the embodiment of the present disclosure.

In some embodiments, the handover signaling is MAC CE, or the handover signaling is DCI.

In an embodiment of the present disclosure, the handover signaling sent by the first network device to the terminal can be MAC CE, and the terminal can perform handover after receiving the MAC CE.

Alternatively, the handover signaling sent by the first network device to the terminal may be DCI, and the terminal may perform handover after receiving the DCI.

It should be noted that the handover signaling uses different ways to indicate the TCI state to indicate the target cell.

In some embodiments, in a case where the handover signaling is MAC CE, the MAC CE is configured to activate the TCI state of a cell.

That is, if the handover signaling determined by the first network device is MAC CE, the first network device sends the MAC CE to the terminal, and the MAC CE is configured to indicate a TCI state of a cell, and the cell corresponding to the TCI state is the target cell by default.

In other embodiments, in a case where the handover signaling is DCI, the DCI is configured to indicate a TCI state corresponding to one of the multiple activated cells.

That is, if the handover signaling determined by the first network device is DCI, and before sending the DCI, the first network device has activated the TCI states corresponding to multiple cells for the terminal, then a TCI state corresponding to one of the multiple activated cells is indicated by the sent DCI, thereby indicating that the cell corresponding to the TCI state is the target cell.

In some embodiments, the TCI states corresponding to the multiple activated cells are activated by MAC CE. That is, the first network device needs to first send a MAC CE to the terminal, activate the TCI states of multiple cells through the MAC CE, and then indicate the TCI state of one of the multiple activated cells through DCI.

It should be noted that in the embodiment of the present disclosure, the first network device and the second network device are managed by different DUs, and the first network device can directly send the TCI state indicated by the above-mentioned handover signaling to perform cell handover. In other embodiments, the first network device and the second network device also have the situation of being applied to intra-DU, that is, the cells corresponding to the first network device and the second network device are managed by the same DU. In this case, the first network device and the second network device need to consider not only the TCI state indicated by the handover signaling, but also a type indicator.

In some embodiments, the handover signaling also includes a type indicator, which indicates whether to perform cell handover.

In some embodiments, the handover signaling also includes a type indicator. The type indicator indicates whether to perform cell handover.

In the embodiment of the present disclosure, since the first network device has activated multiple TCI states, for each TCI state, a type indicator corresponding to each TCI state is also indicated, so that when the TCI state of one of the multiple cells is indicated by DCI, whether to hand over to the target cell is determined based on the target cell corresponding to the TCI state and the type indicator.

For example, the type indicator includes 1 bit. When the type indicator is 0, the terminal determines not to hand over to the target cell according to the target cell corresponding to the TCI state and the type indicator. When the type indicator is 1, the terminal determines to hand over to the target cell according to the target cell corresponding to the TCI state and the type indicator.

It should be noted that the embodiment of the present disclosure is explained by taking an example of indicating the target cell by indicating the TCI state. In another embodiment, the handover signaling also includes a handover indication field, which indicates the target cell.

In the embodiment of the present disclosure, the first network device directly sets the handover indication field in the handover signaling, and directly indicates the target cell through the handover indication field.

In some embodiments, the handover indication field indicates the identity of the target cell. For example, the identity of the target cell is the ID of the target cell.

In some embodiments, the handover indication field includes a preset number of bits, and the values of the preset number of bits are different, indicating different target cells.

The preset number is set by the network device, or is agreed upon by the communication protocol, or is set in other ways, and the embodiments of the present disclosure are not limited. For example, the preset number is 2, 3, 4 or other values.

For example, if the preset number is 2, the first network device indicates 4 different target cells through a 2-bit handover indication field. If the handover indication field is 00, it indicates target cell 1, or, if the handover indication field is 01, it indicates target cell 2, or, if the handover indication field is 10, it indicates target cell 3, or, if the handover indication field is 11, it indicates target cell 4.

In some embodiments, the terminal accesses a target cell indicated by the handover signaling through random access mode in response to the handover signaling.

The random access mode refers to that the terminal sends a random access preamble to the second network device corresponding to the target cell; the second network device receives the random access preamble, sends a random access response in response to the random access preamble; the terminal sends an RRC connection request after receiving the random access response; and the second network device completes the access after receiving the RRC connection request.

That is, in the embodiment of the present disclosure, a handover signaling is received, and in response to the handover signaling, the handover to the target cell can be performed through the above random access mode.

In some embodiments, the resource for random access is configured by configuration signaling. For details, refer to the resource for random access included in the configuration signaling in the above embodiment.

In the solution provided by the embodiment of the present disclosure, after the terminal receives the handover signaling, it can hand over to the target cell through a random access signaling in response to the handover signaling, breaking the limitation that the network device hands over only based on the cell measurement result. Moreover, in the embodiment of the present disclosure, the handover signaling sent by the first network device indicates the target cell, and does not need to indicate the parameter information of the target cell, thereby saving the signaling overhead and improving the timeliness of handover to the target cell.

It should be noted that the above embodiment is illustrated by taking an example of the terminal handing over to the target cell by the random access mode. In another embodiment, if the terminal has obtained the TA, the terminal can directly hand over to the target cell.

In the embodiment of the present disclosure, in the case where the TA has been obtained, in response to the handover signaling, an access confirmation message is sent to the second network device corresponding to the target cell based on the configured resource, and handover to the target cell indicated by the handover signaling is performed.

In the embodiment of the present disclosure, the TA indicates the timing advance of the terminal, that is, the terminal can complete uplink synchronization according to the TA. Thus, the terminal sends access confirmation information to the second network device corresponding to the target cell based on the configured resource in response to the received handover signaling, and informs the second network device through the access confirmation information that the terminal can access the target cell, and then communicate through the target cell.

In the solution provided by the embodiment of the present disclosure, after the receiving the handover signaling, if the terminal has obtained the TA, the terminal sends access confirmation information in response to the handover signaling, and then hands over to the target cell, breaking the limitation that the network device hands over only based on the cell measurement result. In addition, in the embodiment of the present disclosure, the handover signaling sent by the first network device indicates the target cell, and does not need to indicate the parameter information of the target cell, thereby saving the signaling overhead and improving the timeliness of handover to the target cell.

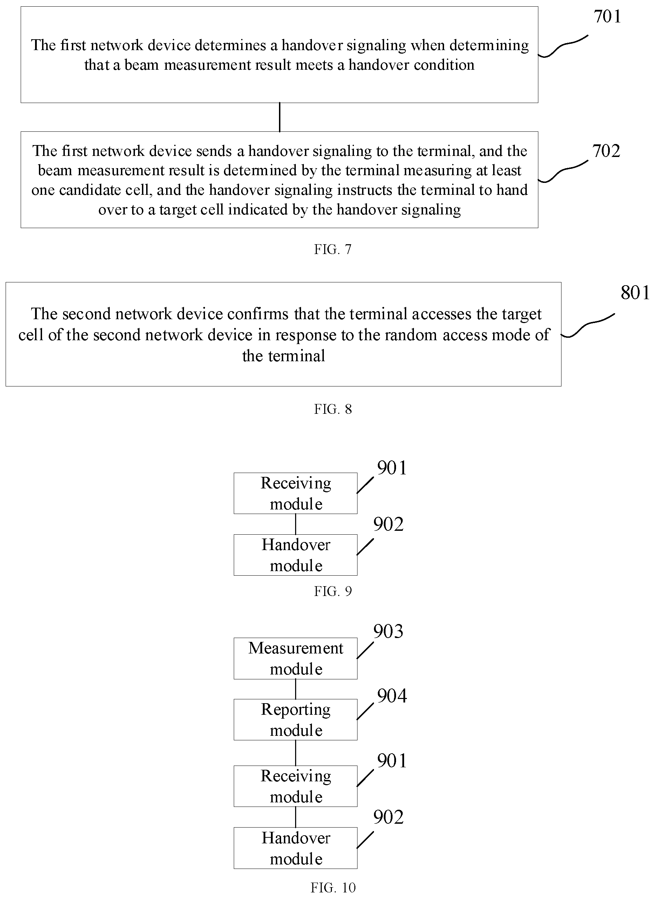

FIG. 7 shows a flow chart of a handover method provided by an example embodiment of the present disclosure, which can be applied to the first network device shown in FIG. 1, for example. The method includes at least part of the following contents:
Step 701: the first network device determines a handover signaling when determining that a beam measurement result meets a handover condition.

The beam measurement result refers to a result obtained by the terminal performing L1 (layer 1) measurement.

The handover condition refers to a judgment condition for the terminal to perform cell handover. If the network device determines that the beam measurement result of the candidate cell meets the handover condition, it can instruct the terminal to hand over to the candidate cell that meets the handover condition.

In some embodiments, the handover condition refers to that an average value or a maximum value of the beam measurement results of the candidate cell is greater than a preset threshold. That is, when the average value of the beam measurement results of the candidate cell is greater than the preset threshold, it is determined that the handover condition is met. Or, when the maximum value of the beam measurement results of the candidate cell is greater than the preset threshold, it is determined that the handover condition is met.

In other embodiments, the handover condition refers to that the top N best measurement results in the beam measurement result are the measurement result of the candidate cell, and N is a positive integer. That is, when the measurement results of the candidate cell are the top N best measurement results, it is determined that the handover condition is met.

In other embodiments, the handover condition refers to that the measurement result of the best beam of the candidate cell is greater than the sum of the measurement result of the best beam of the serving cell and the first offset value (offset1). That is, when the measurement result of the best beam of the candidate cell is greater than the sum of the measurement result of the best beam of the serving cell and the first offset value, it is determined that the handover condition is met.

In other embodiments, the handover condition refers to that the average value of the beam measurement results of the candidate cell is greater than the sum of the average value of the beam measurement results of the serving cell and the second offset value (offset2). That is, when the average value of the beam measurement results of the candidate cell is greater than the sum of the average value of the beam measurement results of the serving cell and the second offset value, it is determined that the handover condition is met.

It should be noted that in the embodiment of the present disclosure, the first network device determining whether the beam measurement result meets the handover condition is achieved according to the first network device's own rules, and the present disclosure does not limit the first network device to determine whether the beam measurement result meets the handover condition.

For example, after the first network device determines that the beam measurement result meets the handover condition, it will also determine whether the current load meets the handover condition, and determine the handover signaling when the current load meets the handover condition.

In an embodiment of the present disclosure, the beam measurement result includes a measurement result of at least one candidate cell. That is, the terminal measures at least one candidate cell, obtains a beam measurement result of at least one candidate cell, and reports the beam measurement result of at least one candidate cell to the network device. After the network device receives the beam measurement result sent by the terminal, it can determine the handover signaling according to the beam measurement result.

The candidate cell refers to a cell for which the terminal needs to perform beam measurement. In some embodiments, at least one candidate cell is configured by the network device.

Step 702: the first network device sends a handover signaling to the terminal, and the beam measurement result is determined by the terminal measuring at least one candidate cell, and the handover signaling instructs the terminal to hand over to a target cell indicated by the handover signaling.

In some embodiments, the first network device corresponds to a source cell and can also be referred to as a sourcecell.

In some embodiments, the first network device also sends a response information to the CU, and the response information instructs the terminal to perform cell handover and indicates the target cell. After the CU receives the response information sent by the first network device, it can determine that the terminal will hand over subsequently and it can determine the target cell to be handed over to.

The CU refers to a device that controls the first network device, and the CU can also control a second network device corresponding to the target cell.

In the embodiment of the present disclosure, the first network device receives the beam measurement result reported by the terminal, and the network device can determine whether the handover condition is met according to the beam measurement result of at least one candidate cell, determine the handover signaling when determining that the beam measurement result meets the handover condition, and send the handover signaling to the terminal. After the terminal receives the handover signaling, it can be determined that the first network device instructs the terminal to hand over to the target cell.

In the solution provided by the embodiment of the present disclosure, a solution is provided in which a network device controls a terminal to perform cell handover according to a beam measurement result, so as to ensure that the network device determines a handover signaling when determining that the beam measurement result meets a handover condition, and the terminal performs handover according to the handover signaling, breaking the limitation that the network device performs handover only based on the cell measurement result.

Moreover, in the embodiment of the present disclosure, the handover signaling sent by the first network device indicates a target cell, and does not need to indicate parameter information of the target cell, thereby saving the signaling overhead and improving the timeliness of handover to the target cell.

In some embodiments, the first network device sends a configuration signaling to the terminal, and the configuration signaling is used to configure at least one candidate cell for the terminal.

In an embodiment of the present disclosure, the first network device can determine at least one candidate cell, and then send a configuration signaling to the terminal to configure the terminal with at least one candidate cell determined by the first network device.

In some embodiments, the first network device determines at least one candidate cell based on a cell measurement result, and the cell measurement result and the beam measurement result are measurement results of different layers.

The cell measurement result refers to a result obtained by the terminal performing L3 (layer 3) measurement.

In the embodiment of the present disclosure, the first network device can obtain a cell measurement result of at least one neighboring cell, and the first network device can determine at least one candidate cell based on the cell measurement result of the neighboring cell. Then, the first network device sends a configuration signaling to the terminal to configure the terminal with at least one determined candidate cell.

In some embodiments, the configuration signaling includes at least one of the following:
(1) A TCI state of the candidate cell.
   The TCI state is used for beam indication. The TCI state of the candidate cell actually refers to the beam of the candidate cell.
(2) A resource for random access.
   The random access refers to that the terminal can access the target cell by random access. The resource for random access refers to a resource configured to transmit information during the random access process.
(3) A resource for sending access confirmation information to the target cell.

The access confirmation information indicates that the terminal has accessed the target cell.

In some embodiments, the configuration signaling is RRC signaling, or the configuration signaling can also be other types of signaling, which is not limited in the embodiments of the present disclosure.

In some embodiments, the resource for sending the access confirmation information to the target cell is a PUSCH resource. For example, the terminal sends a MAC CE to the target cell through the PUSCH resource to indicate successful access to the target cell.

In other embodiments, the resource for sending the access confirmation information to the target cell is an SR resource. For example, the terminal sends an SR to the target cell through the SR resource to indicate successful access to the target cell.

In some embodiments, the first network device receives at least one beam measurement result sent by the terminal, and the beam measurement result is obtained by the terminal performing beam measurement on at least one candidate cell.

After the terminal reports the at least one beam measurement result, the first network device can receive the at least one beam measurement result reported by the terminal, and then can perform the subsequent step of determining the handover signaling.

In another embodiment, the terminal can report the beam measurement result multiple times, and the first network device can also receive the beam measurement result multiple times, and then perform step 201 multiple times to dynamically instruct the terminal to perform cell handover.

In some embodiments, the terminal performs beam measurement every preset time period, and then reports the beam measurement result. The first network device will also receive the beam measurement result every preset time period, and then determine whether to send a handover signaling according to the received beam measurement results, that is, dynamic handover is achieved.

For example, the preset time period is set by the network device, or is agreed by the communication protocol, or is set in other ways, which is not limited in the embodiments of the present disclosure.

In some embodiments, the handover signaling is MAC CE, or the handover signaling is DCI.

In the embodiments of the present disclosure, the handover signaling sent by the first network device to the terminal may be MAC CE, and the terminal can perform handover after receiving the MAC CE.

Alternatively, the handover signaling sent by the first network device to the terminal may be DCI, and the terminal can perform handover after receiving the DCI.

It should be noted that the handover signaling uses different ways to indicate the TCI state to indicate the target cell.

In some embodiments, in a case where the handover signaling is MAC CE, the MAC CE is configured to activate a TCI state of a cell.

That is, if the handover signaling determined by the first network device is MAC CE, the first network device sends the MAC CE to the terminal, and the MAC CE is configured to indicate a TCI state of a cell, and the cell corresponding to the TCI state is the target cell by default.

In other embodiments, in a case where the handover signaling is DCI, the DCI is configured to indicate a TCI state corresponding to one of the multiple activated cells.

That is, if the handover signaling determined by the first network device is DCI, and before sending the DCI, the first network device has activated the TCI states corresponding to multiple cells for the terminal, the TCI state corresponding to one of the multiple activated cells is indicated by the sent DCI, thereby indicating that the cell corresponding to the TCI state is the target cell.

In some embodiments, the TCI states corresponding to the multiple activated cells are activated by MAC CE. That is, the first network device needs to first send a MAC CE to the terminal, activate the TCI states of multiple cells through the MAC CE, and then indicate the TCI state of one of the multiple activated cells through DCI.

It should be noted that in the embodiment of the present disclosure, the first network device and the second network device are managed by different DUs, and the first network device can directly send the TCI state indicated by the above-mentioned handover signaling to perform cell handover. In other embodiments, the first network device and the second network device also have the situation of being applied to intra-DU, that is, the cells corresponding to the first network device and the second network device are managed by the same DU. In this case, the first network device and the second network device need to consider not only the TCI state indicated by the handover signaling, but also a type indicator.

In some embodiments, the handover signaling also includes a type indicator, which indicates whether to perform cell handover.

In the embodiment of the present disclosure, since the first network device has activated multiple TCI states, for each TCI state, a type indicator corresponding to a handover type of each TCI state is also indicated, so that when the TCI state of one of the multiple cells is indicated by DCI, whether to hand over to the target cell is determined based on the target cell corresponding to the TCI state and the type indicator.

For example, the type indicator includes 1 bit. When the type indicator is 0, the terminal determines not to hand over to the target cell according to the target cell corresponding to the TCI state and the type indicator. When the type indicator is 1, the terminal determines to hand over to the target cell according to the target cell corresponding to the TCI state and the type indicator.

It should be noted that the embodiment of the present disclosure is explained by taking an example of indicating the target cell by indicating the TCI state. In another embodiment, the handover signaling also includes a handover indication field, which indicates the target cell.

In the embodiment of the present disclosure, the first network device directly sets the handover indication field in the handover signaling, and directly indicates the target cell through the handover indication field.

In some embodiments, the handover indication field indicates the identity of the target cell. For example, the identity of the target cell is the ID of the target cell.

In some embodiments, the handover indication field includes a preset number of bits, and the values of the preset number of bits are different, indicating different target cells.

The preset number is set by the network device, or is agreed upon by the communication protocol, or is set in other ways, and the embodiments of the present disclosure are not limited. For example, the preset number is 2, 3, 4 or other values.

For example, if the preset number is 2, the first network device indicates 4 different target cells through a 2-bit handover indication field. If the handover indication field is 00, it indicates target cell 1, or, if the handover indication field is 01, it indicates target cell 2, or, if the handover indication field is 10, it indicates target cell 3, or, if the handover indication field is 11, it indicates target cell 4.

In the solution provided by the embodiments of the present disclosure, the first network device can use multiple forms of handover signaling to instruct the terminal to hand over to the target cell, which expands the way the first network device sends the handover signaling and improves the diversity of the handover signaling.

FIG. 8 shows a flowchart of a handover method provided by an example embodiment of the present disclosure, which can be applied to the second network device shown in FIG. 1, for example. The method includes at least part of the following contents:
Step 801: the second network device confirms that the terminal accesses the target cell of the second network device in response to the random access mode of the terminal.

In the embodiment of the present disclosure, the terminal accesses the target cell of the second network device based on the random access mode. After the second network device determines that the terminal accesses through the random access mode, it can confirm that the terminal accesses the target cell of the second network device.

It should be noted that the embodiment of the present disclosure is explained by taking an example of the second network device confirms that the terminal accesses the target cell in response to the random access mode. In another embodiment, the second network device receives the access confirmation information sent by the terminal and confirms that the terminal accesses the target cell.

FIG. 9 shows a block diagram of a handover device provided by an example embodiment of the present disclosure. Referring to FIG. 9, the device includes:
a receiving module 901, configured to receive a handover signaling sent by a first network device, where the handover signaling is determined by a first network device when determining that a beam measurement result meets a handover condition, and the beam measurement result is determined by the terminal measuring at least one candidate cell; and
a handover module 902, configured to hand over to a target cell indicated by the handover signaling in response to the handover signaling.

In some embodiments, the handover signaling is a media access control control element MAC CE, or the handover signaling is downlink control information DCI.

In some embodiments, in a case where the handover signaling is the MAC CE, the MAC CE is configured to activate a transmission configuration indicator TCI state of a cell.

In some embodiments, in a case where the handover signaling is the DCI, the DCI indicates a TCI state corresponding to one of the multiple activated cells.

In some embodiments, the TCI states corresponding to the multiple activated cells are activated by the MAC CE.

In some embodiments, the handover signaling also includes a type indicator.

In some embodiments, the handover signaling includes a handover indication field, and the handover indication field indicates the target cell.

In some embodiments, the receiving module 901 is further configured to receive a configuration signaling sent by a first network device, and the configuration signaling is used to configure the at least one candidate cell for the terminal.

In some embodiments, the configuration signaling includes at least one of the following:
a TCI state of the candidate cell;
a resource for random access; and
a resource for sending access confirmation information to the target cell.

In some embodiments, the configuration signaling is a radio resource control RRC signaling.

In some embodiments, referring to FIG. 10, the device further includes:
a measurement module 903 configured to perform beam measurement on the at least one candidate cell to obtain a beam measurement result of the at least one candidate cell; and
a reporting module 904 configured to report at least one of the beam measurement results.

In some embodiments, the handover module 902 is further configured to access the target cell indicated by the handover signaling through random access in response to the handover signaling.

In some embodiments, the handover module 902 is further configured to send access confirmation information to the second network device corresponding to the target cell based on the configured resource in response to the handover signaling in the case where the TA has been obtained, and hand over to the target cell indicated by the handover signaling.

It should be noted that the device provided by the above embodiment, when implementing its functions, is only illustrated by the division of the above functional modules. In practical applications, the above functions can be assigned to different functional modules as needed. That is, the internal structure of the device can be divided into different functional modules to complete all or part of the functions described above. In addition, the device and method embodiments provided in the above embodiment belong to the same concept, and the specific implementation process is detailed in the method embodiment, which will not be repeated here.

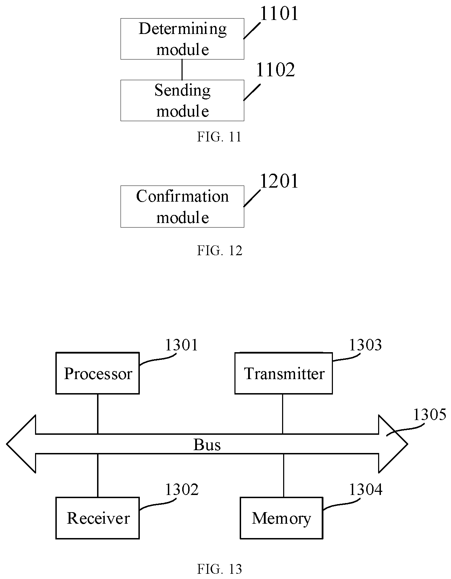

FIG. 11 shows a block diagram of a handover device provided by an example embodiment of the present disclosure. Referring to FIG. 11, the device includes:
a determining module 1101, configured to determine a handover signaling when determining that a beam measurement result meets a handover condition;
a sending module 1102, configured to send the handover signaling to a terminal, the beam measurement result is determined by the terminal measuring at least one candidate cell, and the handover signaling instructs the terminal to hand over to a target cell indicated by the handover signaling.

In some embodiments, the handover signaling is MAC CE, or the handover signaling is DCI.

In some embodiments, when the handover signaling is the MAC CE, the MAC CE is configured to activate a transmission configuration indicator TCI state of a cell.

In some embodiments, when the handover signaling is the DCI, the DCI indicates a TCI state corresponding to one of the multiple activated cells.

In some embodiments, TCI states corresponding to the activated multiple cells are activated by the MAC CE.

In some embodiments, the handover signaling also includes a type indicator.

In some embodiments, the handover signaling includes a handover indication field, and the handover indication field indicates the target cell.

In some embodiments, the sending module 1102 is also configured to send configuration signaling to the terminal, and the configuration signaling is used to configure the at least one candidate cell for the terminal.

In some embodiments, the configuration signaling includes at least one of the following:
a TCI state of the candidate cell;
a resource for random access; and
a resource for sending access confirmation information to the target cell.

In some embodiments, the configuration signaling is RRC signaling.

In some embodiments, the sending module 1102 is also configured to receive at least one beam measurement result sent by the terminal, and the beam measurement result is obtained by the terminal performing beam measurement on the at least one candidate cell.

In some embodiments, the sending module 1102 is also configured to send a response information to the central unit CU, and the response information instructs the terminal to perform cell handover and indicates the target cell.

In some embodiments, the device further includes:
a confirmation module 1101 further configured to confirm that the terminal accesses the target cell in response to the random access mode of the terminal.

In some embodiments, the device further includes:
a confirmation module 1101 further configured to receive the access confirmation message sent by the terminal to confirm that the terminal accesses the target cell, and the access confirmation message is sent by the terminal based on the configured resource in response to the handover signaling when the TA has been obtained.

In some embodiments, the device further includes:
the determining module 1101 further configured to determine the at least one candidate cell according to the cell measurement result;
the cell measurement result and the beam measurement result are measurement results of different layers.

It should be noted that the device provided in the above embodiment, when realizing its function, is only illustrated by the division of the above functional modules. In actual application, the above function can be allocated to and completed by different functional modules as needed. That is, the internal structure of the device is divided into different functional modules to complete all or part of the functions described above. In addition, the device and method embodiments provided in the above embodiments belong to the same concept, and their specific implementation processes are detailed in the method embodiments, which will not be repeated here.

FIG. 12 shows a block diagram of a handover device provided by an example embodiment of the present disclosure. Referring to FIG. 12, the device includes:
a confirmation module 1201, configured to confirm that a terminal accesses a target cell of a second network device in response to a random access mode of the terminal.

In some embodiments, the confirmation module 1201 is further configured to receive access confirmation information sent by the terminal to confirm that the terminal accesses the target cell. The access confirmation information is sent by the terminal based on the configured resource in response to the handover signaling when the TA has been obtained.

It should be noted that the device provided in the above embodiment, when implementing its functions, is only illustrated by the division of the above functional modules. In actual applications, the above functional can be allocated to and completed by different functional modules as needed. That is, the internal structure of the device can be divided into different functional modules to complete all or part of the functions described above. In addition, the device and method embodiments provided in the above embodiment belong to the same concept. The specific implementation process is detailed in the method embodiment, which will not be repeated here.

FIG. 13 shows a schematic diagram of a structure of a communication device provided by an example embodiment of the present disclosure. The communication device includes a processor 1301, a receiver 1302, a transmitter 1303, a memory 1304 and a bus 1305.

The processor 1301 includes one or more processing cores, and the processor 1301 executes various functional applications and information processing by running software programs and modules.

The receiver 1302 and the transmitter 1303 can be implemented as a communication component, which can be a communication chip.

The memory 1304 is connected to the processor 1301 via the bus 1305.

The memory 1304 can be configured to store at least one program code, and the processor 1301 is configured to execute the at least one program code to implement the various steps in the above method embodiment.

In addition, the communication device can be a terminal or a network device. The memory 1304 can be implemented by any type of volatile or non-volatile storage device or a combination thereof, and the volatile or non-volatile storage device includes but is not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an example embodiment, a computer-readable storage medium is also provided, in which an executable program code is stored, and the executable program code is loaded and executed by a processor to implement the handover method performed by the communication device provided in the above-mentioned various method embodiments.

In an example embodiment, a chip is provided. The chip includes a programmable logic circuit and/or a program instruction. When the chip is running on a terminal or a network device, it is configured to implement the handover method provided in the various method embodiments.

In an example embodiment, a computer program product is provided. When the computer program product is executed by a processor of a terminal or a network device, it is configured to implement the handover method provided in the above-mentioned various method embodiments.

Those skilled in the art can understand that all or part of the steps of implementing the above-mentioned embodiments can be completed by hardware, or by instructing the relevant hardware to complete the steps through a program, and the program can be stored in a computer-readable storage medium, and the storage medium mentioned above can be a read-only memory, a disk or an optical disk, etc.

The above are only optional embodiments of the present disclosure and are not intended to limit the present disclosure. Any modification, equivalent replacement, improvement, etc. made within the spirit and principle of the present disclosure shall be included in the protection scope of the present disclosure.

## Claims

1. A handover method, performed by a terminal, comprising:
receiving a handover signaling sent by a first network device, wherein the handover signaling is determined by the first network device when determining that a beam measurement result meets a handover condition, and the beam measurement result is determined by the terminal measuring at least one candidate cell; and
in response to the handover signaling, handing over to a target cell indicated by the handover signaling.

2. The method according to claim 1, wherein the handover signaling is a media access control control element MAC CE, or the handover signaling is downlink control information DCI.

3. The method according to claim 2, wherein when the handover signaling is the MAC CE, the MAC CE is configured to activate a transmission configuration indicator TCI state of a cell.

4. The method according to claim 2, wherein when the handover signaling is the DCI, the DCI indicates a TCI state corresponding to one of multiple activated cells.

5. The method according to claim 4, wherein TCI states corresponding to the multiple activated cells are activated by MAC CE.

6. The method according to claim 4, wherein the handover signaling further comprises a type indicator.

7. The method according to claim 2, wherein the handover signaling comprises a handover indication field, and the handover indication field indicates the target cell.

8. The method according to any one of claims 1 to 7, further comprising:
receiving a configuration signaling sent by the first network device, wherein the configuration signaling is used to configure the at least one candidate cell for the terminal.

9. The method according to claim 8, wherein the configuration signaling comprises at least one of:
a TCI state of the candidate cell;
a resource for random access; and
a resource for sending access confirmation information to the target cell.

10. The method according to claim 8, wherein the configuration signaling is a radio resource control RRC signaling.

11. The method according to claim 1, further comprising:
performing beam measurement on the at least one candidate cell and obtaining a beam measurement result of the at least one candidate cell; and
reporting at least one beam measurement result.

12. The method according to claim 1, wherein in response to the handover signaling, handing over to the target cell indicated by the handover signaling comprises:
in response to the handover signaling, accessing the target cell indicated by the handover signaling through random access.

13. The method according to claim 1, wherein in response to the handover signaling, handing over to the target cell indicated by the handover signaling comprises:
in a case where a timing advance TA has been obtained, in response to the handover signaling, sending access confirmation information to a second network device corresponding to the target cell based on a configured resource, and handing over to the target cell indicated by the handover signaling.

14. A handover method, performed by a first network device, comprising:
determining a handover signaling when determining that a beam measurement result meets a handover condition; and
sending the handover signaling to a terminal, wherein the beam measurement result is determined by the terminal measuring at least one candidate cell, and the handover signaling instructs the terminal to hand over to a target cell indicated by the handover signaling.

15. The method according to claim 14, wherein the handover signaling is MAC CE, or the handover signaling is DCI.

16. The method according to claim 15, wherein when the handover signaling is the MAC CE, the MAC CE is configured to activate a transmission configuration indicator TCI state of a cell.

17. The method according to claim 15, wherein when the handover signaling is the DCI, the DCI indicates a TCI state corresponding to one of multiple activated cells.

18. The method according to claim 17, wherein TCI states corresponding to the multiple activated cells are activated by MAC CE.

19. The method according to claim 17, wherein the handover signaling further comprises a type indicator.

20. The method according to claim 15, wherein the handover signaling comprises a handover indication field, and the handover indication field indicates the target cell.

21. The method according to claim 14, further comprising:
sending a configuration signaling to the terminal, wherein the configuration signaling is used to configure the at least one candidate cell for the terminal.

22. The method according to claim 21, wherein the configuration signaling comprises at least one of:
a TCI state of the candidate cell;
a resource for random access; and
a resource for sending access confirmation information to the target cell.

23. The method according to claim 21, wherein the configuration signaling is a RRC signaling.

24. The method according to claim 14, further comprising:
receiving at least one beam measurement result sent by the terminal, wherein the beam measurement result is obtained by the terminal performing beam measurement on the at least one candidate cell.

25. The method according to claim 14, further comprising:
sending response information to a central unit CU, wherein the response information instructs the terminal to perform cell handover and indicates the target cell.

26. The method according to claim 14, further comprising:
determining the at least one candidate cell according to a cell measurement result;
wherein the cell measurement result and the beam measurement result are measurement results of different layers.

27. A handover method, performed by a second network device, comprising:
in response to a random access mode of a terminal, confirming that the terminal accesses a target cell of the second network device.

28. The method according to claim 27, further comprising:
receiving access confirmation information sent by the terminal, and confirming that the terminal accesses the target cell, wherein the access confirmation information is sent by the terminal based on configured resource in response to a handover signaling when a TA has been obtained.

29. A handover device, comprising:
a receiving module, configured to receive a handover signaling sent by a first network device, wherein the handover signaling is determined by the first network device when determining that a beam measurement result meets a handover condition, and the beam measurement result is determined by a terminal measuring at least one candidate cell; and
a handover module, configured to hand over to a target cell indicated by the handover signaling in response to the handover signaling.

30. A handover device, comprising:
a determining module, configured to determine a handover signaling when determining that a beam measurement result meets a handover condition; and
a sending module, configured to send the handover signaling to a terminal, wherein the beam measurement result is determined by the terminal measuring at least one candidate cell, and the handover signaling instructs the terminal to hand over to a target cell indicated by the handover signaling.

31. A handover device, comprising:
a confirmation module, configured to confirm that a terminal accesses a target cell of a second network device in response to a random access mode of the terminal.

32. A terminal, comprising:
a processor; and
a transceiver connected to the processor;
wherein the processor is configured to load and execute executable instructions to implement the handover method according to any one of claims 1 to 13.

33. A network device, comprising:
a processor; and
a transceiver connected to the processor;
wherein the processor is configured to load and execute executable instructions to implement the handover method according to any one of claims 14 to 28.

34. A computer-readable storage medium, wherein an executable program code is stored in the computer-readable storage medium, the executable program code is loaded and executed by a processor to implement the handover method according to any one of claims 1 to 28.
